# EUROPEAN PATENT APPLICATION

(11) **EP 4 296 395 A1**
(43) Date of publication of application: **27.12.2023**
(21) Application number: 22780116.4
(22) Date of filing: 16.03.2022
(51) Int. Cl.: C22C 38/00, C21D 8/10, C22C 38/06, C22C 38/58

(54) **STEEL PIPE FOR HIGH-PRESSURE HYDROGEN, CONTAINER FOR HIGH-PRESSURE HYDROGEN, AND METHOD FOR MANUFACTURING SAID STEEL PIPE**

(30) Priority: 30.03.2021 JP 2021058067
(71) Applicant: JFE Steel Corporation, Tokyo 100-0011 (JP)
(72) Inventor: MATSUBARA, Kazuki, Tokyo 100-0011 (JP); TAKAGI, Shusaku, Tokyo 100-0011 (JP); OKANO, Hiroshi, Tokyo 100-0011 (JP)
(74) Representative: Haseltine Lake Kempner LLP
(86) International application number: PCT/JP2022/011874
(87) International publication number: WO 2022/209896

(57) **Abstract**

An object of the present invention is to provide a steel pipe for high-pressure hydrogen having high strength and a low fatigue crack growth rate in a region in which ΔK, which is related to fatigue crack growth resistance, is 10 MPa·m^{1/2} or less.

A steel pipe for high-pressure hydrogen, the steel pipe having a chemical composition containing, by mass%, C: 0.05% to 0.60%, Si: 0.001% to 2.0%, Mn: 0.01% to 5.0%, P: 0.030% or less, S: 0.010% or less, N: 0.010% or less, Al: 0.0001% to 1.00%, O: 0.010% or less, H: 0.00010% or less, and a balance of Fe and incidental impurities and a metallic microstructure including, in terms of area fraction, 3% or less (including 0%) of retained austenite, in which the number of inclusions having an aspect ratio of 2.0 or more and a length of 10 um or more is 15/100 mm² or less.

## Description

### Technical Field

The present invention relates to a steel pipe for high-pressure hydrogen, a high-pressure hydrogen vessel, and a method for manufacturing the steel pipe.

### Background Art

Fuel-cell vehicles, which use hydrogen as a fuel, which do not emit carbon dioxide (CO₂), and which are excellent in terms of energy efficiency, are expected to serve as automobiles with which it is possible to solve CO₂ emission issues and energy issues. To promote the use of such fuel-cell vehicles, it is necessary to build hydrogen stations for supplying hydrogen to the fuel-cell vehicles.
Therefore, vessels which are necessary for safe storage of high-pressure hydrogen at the hydrogen stations, that is, which are excellent in terms of strength and durability, are being developed.

Patent Literature 1 discloses a steel material for storing high-pressure hydrogen, the steel material having a specified chemical composition and a metallic microstructure including mainly bainite, in which the area fraction of bainite is 90% or more, and in which cementite having an average grain size of 50 nm or less and an average aspect ratio of 3 or less is dispersedly precipitated in the bainite. Patent Literature 1 aims to improve strength, toughness, and hydrogen embrittlement resistance by controlling the shape of cementite. Patent Literature 2 discloses a steel pipe for a pressure accumulator, the steel pipe having a specified chemical composition and a metallic microstructure including phases other than ferrite in an amount of 50% or more in terms of area fraction, in which an average prior austenite grain size is 500 um or less. In Patent Literature 2, quenching crack resistance is improved by controlling the prior austenite grain size and the P concentration. Patent Literature 3 discloses a liner for a pressure accumulator made of a steel material, the steel material having a specified chemical composition and a metallic microstructure including, in terms of area fraction, tempered martensite and bainite in a total amount of 70% or more and ferrite in an amount of less than 30%. In Patent Literature 3, an improvement in fatigue strength in hydrogen is realized by controlling phase fractions. Patent Literature 4 discloses a low-alloy steel material for high-pressure hydrogen, the steel material having a specified chemical composition, in which the sum of the numbers of sulfide-based inclusion grains and oxide-based inclusion grains having a grain size of 20 um or more is 10/100 mm² or less when cross-sectional observation is performed. In Patent Literature 4, an improvement in fatigue strength is realized by decreasing the amounts of inclusions.

### Citation List

### Patent Literature

PTL 1: Japanese Unexamined Patent Application Publication No. 2012-107332
PTL 2: International Publication No. 2018/055937
PTL 3: Japanese Unexamined Patent Application Publication No. 2018-53357
PTL 4: Japanese Unexamined Patent Application Publication No. 2018-12855

### Summary of Invention

### Technical Problem

However, in the case of the techniques according to Patent Literature 1 to Patent Literature 4, although it is possible to achieve an improvement in the fatigue limit of the steel materials, there may be a case where very minute defects due to inclusions or the like exist on the surface of the steel material used for an actual vessel. The service life of the actual vessel is ensured on the basis of the fatigue limit obtained by performing a fatigue test in which evaluation is performed by using a test specimen whose surface is machined. However, this alone is insufficient, and a material having such fatigue crack growth resistance in which the fatigue crack growth rate is low in a fatigue crack growth test is important. Usually, regarding fatigue crack growth resistance, the fatigue crack growth rate in a region in which the Paris equation holds in a region in which a stress intensity factor range ΔK is about 20 MPa·m^{1/2} to 30 MPa·m^{1/2} is regarded as important.

On the other hand, when a high-pressure hydrogen vessel is designed, consideration is given to a case where an excessive safety margin is decreased by setting a safety factor to be lower than that for a general pressure vessel, which is set to be 4.0, that is, for example, by setting a safety factor to be about 2.4. In the case where the safety factor is decreased, since it is possible to design the vessel for a higher pressure without changing its shape, there is an increase in storage capacity. In addition, since it is possible to design the vessel with a thinner wall thickness without decreasing the pressure to be endured, there is a decrease in the weight and material cost of the vessel. That is, it is possible to realize an improvement in function and a decrease in cost while ensuring safety.

To realize the design with the lowered safety factor as described above, since it is necessary to set an initial crack on the inner surface of the vessel to be small, the fatigue crack growth rate in a region in which the Paris equation does not hold in a region in which ΔK is 10 MPa·m^{1/2} or less is important. However, in the case of the conventional techniques, no consideration has been given to decreasing the fatigue crack growth rate in a region in which ΔK is 10 MPa·m^{1/2} or less.

The present invention has been completed in view of the problems described above, and an object of the present invention is to provide a steel pipe for high-pressure hydrogen having high strength and a low fatigue crack growth rate in a region in which ΔK, which is related to fatigue crack growth resistance, is 10 MPa·m^{1/2} or less.

In addition, an object of the present invention is to provide a high-pressure hydrogen vessel for which the steel pipe for high-pressure hydrogen described above is used and to provide a method for manufacturing the steel pipe for high-pressure hydrogen described above.

### Solution to Problem

The present inventors conducted investigations regarding the influence of the chemical composition and metallic microstructure of a steel material which is used for manufacturing a steel pipe for high-pressure hydrogen and a high-pressure hydrogen vessel on the fatigue crack growth rate in a region in which ΔK is low, that is, 10 MPa·m^{1/2} or less. As a result, in the microstructure of the steel material, it was found that, in the case where the amount of retained austenite is small and the number of inclusions having a small curvature radius, which have a strong effect on stress concentration, is small, fatigue crack growth resistance is excellent in a low ΔK region in high-pressure hydrogen gas.

On the basis of the knowledge described above, detailed investigations were conducted regarding the chemical composition, microstructure, and manufacturing conditions of steel, which has led to the completion of the present invention.

That is, the subject matter of the present invention is as follows.
[1] A steel pipe for high-pressure hydrogen, the steel pipe having a chemical composition containing, by mass%,
   C: 0.05% to 0.60%,
   Si: 0.001% to 2.0%,
   Mn: 0.01% to 5.0%,
   P: 0.030% or less,
   S: 0.010% or less,
   N: 0.010% or less,
   Al: 0.0001% to 1.00%,
   O: 0.010% or less,
   H: 0.00010% or less, and a balance of Fe and incidental impurities and
   a metallic microstructure including, in terms of area fraction, 3% or less (including 0%) of retained austenite, in which the number of inclusions having an aspect ratio of 2.0 or more and a length of 10 um or more is 15/100 mm² or less.
[2] The steel pipe for high-pressure hydrogen according to item [1], in which the chemical composition further contains, by mass%, one or both selected from
   Mo: 5.0% or less and
   Cr: 5.0% or less.
[3] The steel pipe for high-pressure hydrogen according to item [1] or [2], in which the chemical composition further contains, by mass%, one, two, or more selected from
   Ni: 5.0% or less,
   Cu: 5.0% or less,
   Co: 5.0% or less, and
   B: 0.01% or less.
[4] The steel pipe for high-pressure hydrogen according to any one of items [1] to [3], in which the chemical composition further contains, by mass%, one, two, or more selected from
   V: 1.0% or less,
   W: 5.0% or less,
   Nb: 0.1% or less,
   Ti: 0.1% or less,
   Zr: 0.2% or less,
   Hf: 0.2% or less,
   Ta: 0.2% or less,
   Sn: 0.2% or less, and
   Sb: 0.2% or less.
[5] The steel pipe for high-pressure hydrogen according to any one of items [1] to [4], in which the chemical composition further contains, by mass%, one, two, or all selected from
   Ca: 0.01% or less,
   Mg: 0.01% or less, and
   REM: 0.5% or less.
[6] A high-pressure hydrogen vessel, the vessel being manufactured by using the steel pipe for high-pressure hydrogen according to any one of items [1] to [5] above.
[7] A method for manufacturing a steel pipe for high-pressure hydrogen, the method including:
   a casting process of casting a steel material having the chemical composition according to any one of items [1] to [5] above at a casting speed of 1.0 m/min or lower;
   a heating process of heating the steel material cast in the casting process at a temperature of 1350°C or lower;
   a rolling process of rolling the steel material heated in the heating process under a condition of a finish rolling temperature of 820°C or higher to manufacture a steel pipe;
   a cooling process of cooling the steel pipe obtained in the rolling process to a temperature of 50°C or lower at an average cooling rate of 5°C/s or higher in a temperature range of 800°C to 350°C and at an average cooling rate of 3°C/s or lower in a temperature range of 350°C to 50°C; and
   a tempering process of heating the steel pipe cooled in the cooling process to a temperature of 400°C or higher and equal to or lower than the A1 transformation temperature to temper the heated steel pipe.

### Advantageous Effects of Invention

According to the present invention, it is possible to provide a steel pipe for high-pressure hydrogen having high strength and a low fatigue crack growth rate in a region in which ΔK, which is related to fatigue crack growth resistance, is 10 MPa·m^{1/2} or less.

By using the steel pipe for high-pressure hydrogen according to the present invention, it is possible to provide, at lower cost, a high-pressure hydrogen vessel with which it is possible to realize an improvement in function while ensuring safety.

### Description of Embodiments

Hereafter, the present invention will be specifically described.

In the present invention, in the case where the amount of retained austenite is small in the metallic microstructure of the steel pipe and the number of inclusions having a small curvature radius, which have a strong effect on stress concentration, is small in the metallic microstructure of the steel pipe, fatigue crack growth resistance is excellent with high-pressure hydrogen gas. Specifically, in the metallic microstructure of the steel pipe, the area fraction of retained austenite is set to be 3% or less (including 0%), and the number of inclusions having an aspect ratio of 2.0 or more and a length of 10 um or more is set to be 15/100 mm² or less. Hereafter, the reasons for the limitations placed on such factors will be described. Here, "%" related to the metallic microstructure denotes the area fraction, unless otherwise noted. In addition, in the present invention, the expression "high strength" denotes a case of a tensile strength of 800 MPa or higher.

### [Metallic microstructure]

### Retained austenite: 3% or less

In the case where retained austenite exists in the metallic microstructure of the steel material, since there is an increase in the amount of hydrogen in steel, there may be a case of an increase in hydrogen embrittlement sensitivity. Moreover, since transformation-induced martensite, which is formed as a result of retained austenite transforming into martensite due to a stress loading applied in practical use, has such high hardness that hydrogen induced cracking tends to occur, a minute crack is generated in a portion of transformation-induced martensite, which may result in an increase in the fatigue crack growth rate. In the present invention, to decrease the fatigue crack growth rate, the amount of retained austenite in the metallic microstructure is set to be 3% or less. The smaller the amount of retained austenite in the metallic microstructure, the lower the fatigue crack growth rate. Therefore, it is preferable that the amount of retained austenite be 2% or less or more preferably 1% or less. On the other hand, the lower limit of the amount of retained austenite in the metallic microstructure is set to be 0%.

To achieve high strength (tensile strength: 800 MPa or higher), it is preferable that the metallic microstructure include mainly martensite and bainite in such a manner that the total area fraction of martensite and bainite is 80% or more. It is more preferable that such a total area fraction be 90% or more or even more preferably 95% or more. Here, such a total area fraction may be 100%. In addition, the metallic microstructure may further include optional phases other than martensite, bainite, and retained austenite (hereinafter, referred to as "other phases"). From the viewpoint of increasing the effect of microstructure control, it is preferable that the total area fraction of other phases described above be 10% or less. That is, it is preferable that the total area fraction of martensite, bainite, and retained austenite in the metallic microstructure be 90% or more. Examples of other phases described above include ferrite, pearlite, and the like. In the case where the metallic microstructure includes ferrite, it is preferable that the area fraction of ferrite be 10% or less. It is more preferable that the area fraction of ferrite be 5% or less. In addition, in the case where the metallic microstructure includes pearlite, it is preferable that the area fraction of pearlite be 2% or less. It is more preferable that the area fraction of pearlite be 1% or less. Here, the microstructure described above is determined by using the method described in EXAMPLES.

### Inclusion

Since an inclusion, which has high hardness, is less likely than the base material to deform, the inclusion extends a local elastic strain field and becomes a stress concentration source. Therefore, the inclusion functions as a strong hydrogen accumulation source. The degree of local stress concentration depends on the shape of the inclusion. The closer the shape to spherical, the lower the degree of stress concentration, and the closer the shape to needle-like, the higher the degree of stress concentration. In addition, since the growth of dislocation from the interface between the inclusion and the bulk is promoted due to hydrogen accumulated in a portion in which the degree of local stress concentration is high, there is an increased risk of hydrogen induced cracking. In particular, in a region in which the fatigue crack growth rate is 1.0 × 10⁻⁷ m/cycle or less, since a crack growth distance in one loading cycle is notably smaller than the basic unit of martensite, which is called a martensite lath and has a thin wood-chip-like shape having a thickness of about 2.0 × 10⁻⁷ m, the growth rate is strongly influenced by factors other than dislocation generation from a fatigue crack tip. That is, an inclusion has a marked influence on the fatigue crack growth rate.

Aspect ratio: 2.0 or more and length: 10 um or more In a ΔK region in which the fatigue crack growth rate is comparatively low in an environment in which hydrogen exists in the steel material, an inclusion having an aspect ratio of 2.0 or more induces hydrogen induced cracking, where the aspect ratio is calculated by dividing the length in the longitudinal direction (length) of the inclusion by the length in the thickness direction (thickness) of the inclusion, and, in the case of an inclusion having a length in the longitudinal direction of 10 um or more, there is an increase in the range of the influence of local stress concentration. As a result, there is an increase in the fatigue crack growth rate. Therefore, in the present invention, the number density of inclusions having an aspect ratio of 2.0 or more and a length of 10 um or more is specified. Here, the aspect ratio and length of an inclusion are determined by using the method described in EXAMPLES.

### 15/100 mm² or less

By decreasing the number density of inclusions having a large aspect ratio and a large size, which increase the fatigue crack growth rate in an environment in which hydrogen exists in the steel material, it is possible to inhibit an increase in the fatigue crack growth rate. In the present invention, to decrease the fatigue crack growth rate, the number density of inclusions having an aspect ratio of 2.0 or more and a length of 10 um or more is set to be 15/100 mm² or less. The smaller the number density of such inclusions, the smaller the fatigue crack growth rate. Therefore, it is preferable that the number density of such inclusions be 12/100 mm² or less, more preferably 10/100 mm² or less, even more preferably 8/100 mm² or less, or most preferably 6/100 mm² or less. Although there is no particular limitation on the lower limit of the number density of inclusions, it is preferable that the lower limit be 0.1/100 mm² or more. Here, the number density of inclusions is determined by using the method described in EXAMPLES.

### [Chemical composition]

Moreover, in the present invention, it is important that the steel pipe for high-pressure hydrogen (hereinafter, also simply referred to as "steel pipe") have a specified chemical composition. Therefore, hereafter, the reasons for the limitations placed on the chemical composition of the steel pipe in the present invention will be described. Here, "%" related to a chemical composition denotes "mass%", unless otherwise noted.

### C: 0.05% to 0.60%

C is an element which is necessary to increase strength. To achieve the desired high strength (tensile strength: 800 MPa or higher), the C content is set to be 0.05% or more. It is preferable that the C content be 0.20% or more, more preferably 0.25% or more, or even more preferably 0.33% or more. On the other hand, in the case where the C content is more than 0.60%, there may be a case where quenching crack occurs when quenching is performed. Therefore, the C content is set to be 0.60% or less. In addition, it is preferable that the C content be 0.45% or less or more preferably 0.40% or less.

### Si: 0.001% to 2.0%

Si is an element which contributes to an improvement in strength and the fatigue limit through solid solution strengthening. In the case where the Si content is 0.001% or more, the effects described above are realized. Therefore, the Si content is set to be 0.001% or more. It is preferable that the Si content be 0.15% or more, more preferably 0.2% or more, even more preferably 0.25% or more, or most preferably 0.3% or more. On the other hand, in the case where the Si content is more than 2.0%, the effects described above become saturated, and there is a deterioration in the surface quality of the steel pipe and a deterioration in rolling performance. Therefore, the Si content is set to be 2.0% or less. It is preferable that the Si content be 1.0% or less, more preferably 0.5% or less, or even more preferably 0.4% or less.

### Mn: 0.01% to 5.0%

Mn is an element which contributes to an improvement in strength through solid solution strengthening and an improvement in hardenability and which has the function of improving the fatigue limit. To realize the effects described above, the Mn content is set to be 0.01% or more. It is preferable that the Mn content be 0.4% or more, more preferably 0.5% or more, or even more preferably 0.6% or more. On the other hand, in the case where the Mn content is more than 5.0%, the effects described above become saturated, and it is difficult for rolling and forming to be performed. In addition, austenite tends to be retained. Therefore, the Mn content is set to be 5.0% or less. It is preferable that the Mn content be 1.5% or less, more preferably 1.0% or less, even more preferably 0.9% or less, or most preferably 0.8% or less.

### P: 0.030% or less

P is an element which contributes to an improvement in strength through solid solution strengthening. On the other hand, P is also an element which causes a deterioration in toughness and which increases hydrogen embrittlement sensitivity. In the case where the P content is more than 0.030%, such a deterioration in properties becomes marked. Therefore, the P content is set to be 0.030% or less. It is preferable that the P content be 0.025% or less, more preferably 0.015% or less, or even more preferably 0.010% or less. Although there is no particular limitation on the lower limit of the P content, an excessive decrease in the P content to, for example, less than 0.0001% is accompanied by an increase in manufacturing cost in a steelmaking process. Therefore, it is preferable that the P content be 0.0001% or more.

### S: 0.010% or less

Since an increase in the S content causes red shortness, there may be a case where problems occur in manufacturing. In addition, S causes a deterioration in toughness and increases hydrogen embrittlement sensitivity by forming MnS, which is an inclusion. Such influences cause no problem in the case where the S content is 0.010% or less. Therefore, the S content is set to be 0.010% or less. In the case where a further improvement in properties is desired, it is preferable that the S content be 0.003% or less. Although there is no particular limitation on the lower limit of the S content, an excessive decrease in the S content to, for example, less than 0.00001% is accompanied by an increase in desulfurizing cost in a steelmaking process. Therefore, it is preferable that the S content be 0.00001% or more.

Incidentally, to stabilize toughness at a high level, it is preferable that the sum of the P content and the S content be 0.02% or less.

### N: 0.010% or less

Since N has a small effect on the fatigue property of the steel material, there is no decrease in the effects of the present invention in the case where the N content is 0.010% or less. Therefore, the N content is set to be 0.010% or less. It is preferable that the N content be 0.005% or less or more preferably 0.004% or less. Although there is no particular limitation on the lower limit of the N content, it is desirable that the N content be as small as possible from the viewpoint of improving toughness. Since an excessive decrease in the N content is accompanied by an increase in cost in steelmaking, it is preferable that the N content be 0.00001% or more.

### Al: 0.0001% to 1.00%

Al is an element which is effective as a deoxidizing agent in a steelmaking process. To realize such an effect, the Al content is set to be 0.0001% or more. It is preferable that the Al content be 0.02% or more, more preferably 0.03% or more, or even more preferably 0.04% or more. On the other hand, in the case where the Al content is more than 0.06%, although the effect of deoxidizing becomes saturated, since it is possible to sizing grains in the microstructure due to the addition of large amount of Al, the material properties are stabilized. In the case where the Al content is more than 1.00%, such an effect becomes saturated. Therefore, the Al content is set to be 1.00% or less. It is preferable that the Al content be 0.50% or less, more preferably 0.20% or less, or even more preferably 0.10% or less.

### O: 0.010% or less

Since O causes the formation of oxide-based inclusions, it is preferable that the O content be as small as possible. Such an effect causes no problem in the case where the O content is 0.010% or less. Therefore, the O content is set to be 0.010% or less. It is preferable that the O content be 0.008% or less, more preferably 0.007% or less, or even more preferably less than 0.005%. Although there is no particular limitation on the lower limit of the O content, since there is a deterioration in production efficiency in the case where the O content is less than 0.0001%, it is preferable that the O content be 0.0001% or more.

### H: 0.00010% or less

H may be introduced into the steel material in various manufacturing processes, and, in the case where the amount of H introduced is large, there is an increased risk of cracking occurring after solidification has been finished, and there may be a case of an increase in the fatigue crack growth rate. Such effects cause no problem in the case where the H content is 0.00010% or less. Therefore, the H content is set to be 0.00010% or less. It is preferable that the H content be 0.00008% or less or more preferably less than 0.00005%. Although there is no particular limitation on the lower limit of the H content, since there is a deterioration in production efficiency in the case where the H content is less than 0.000001%, it is preferable that the H content be 0.000001% or more.

The steel pipe according to the present invention contains a balance of Fe and incidental impurities in addition to the constituents described above. In addition, in the present invention, the constituents described below may further be added in addition to the constituents described above.

### Mo: 5.0% or less

Mo is an element which improves hardenability, thereby contributing to an increase in the strength of the steel pipe. Moreover, Mo inhibits an increase in the grain size of prior austenite, contributes to an improvement in fatigue strength through solid solution strengthening, and contributes to a decrease in hydrogen cracking sensitivity. Although there is no particular limitation on the lower limit of the Mo content, in the case where Mo is added to realize the effects described above, it is preferable that the Mo content be 0.0001% or more. It is more preferable that the Mo content be 0.1% or more or even more preferably 0.2% or more. On the other hand, in the case where the Mo content is more than 5.0%, the effects described above become saturated, and there is an increase in cost. Therefore, in the case where Mo is added, the Mo content is set to be 5.0% or less. It is preferable that the Mo content be 2.0% or less, more preferably 1.0% or less, even more preferably 0.5% or less, or most preferably 0.3% or less.

### Cr: 5.0% or less

Cr is an element which improves hardenability, thereby contributing to an increase in the strength of the steel pipe. Moreover, Cr contributes to a decrease in hydrogen cracking sensitivity by inhibiting an increase in the grain size of prior austenite. In addition, Cr improves various properties in a hydrogen environment by inhibiting an increase in the grain size of prior austenite. Although there is no particular limitation on the lower limit of the Cr content, in the case where Cr is added to realize the effects described above, it is preferable that the Cr content be 0.0001% or more. It is more preferable that the Cr content be 0.2% or more or even more preferably 0.5% or more. On the other hand, in the case where the Cr content is more than 5.0%, the effects described above become saturated, and there is an increase in cost. Therefore, in the case where Cr is added, the Cr content is set to be 5.0% or less. It is preferable that the Cr content be 2.5% or less, more preferably 1.5% or less, even more preferably 1.0% or less, or most preferably 0.9% or less.

### Ni: 5.0% or less, Cu: 5.0% or less, and Co: 5.0% or less

Ni, Cu, and Co are elements which improve hardenability, thereby contributing to an increase in the strength of the steel pipe, and which improve various properties of the material of the steel pipe by inhibiting an increase in the grain size of prior austenite. Although there is no particular limitation on the lower limit of the contents of such elements, in the case where such elements are added to realize the effects described above, it is preferable that the content of each of Ni, Cu, and Co be 0.0001% or more. It is more preferable that the content of each of Ni, Cu, and Co be 0.5% or more. On the other hand, in the case where the content of each of Ni, Cu, and Co is more than 5.0%, the effects described above become saturated, and there is an increase in cost. Therefore, in the case where Ni, Cu, and Co are added, the content of each of Ni, Cu, and Co is set to be 5.0% or less. To inhibit an increase in cost, it is preferable that the content of each of Ni, Cu, and Co be 2.0% or less.

### B: 0.01% or less

B is an element which improves hardenability, thereby contributing to an increase in the strength of the steel pipe, and which improves various properties of the material of the steel pipe by inhibiting an increase in the grain size of prior austenite. Although there is no particular limitation on the lower limit of the B content, in the case where B is added to realize the effects described above, it is preferable that the B content be 0.0001% or more. It is more preferable that the B content be 0.001% or more. On the other hand, in the case where the B content is more than 0.01%, the effects described above become saturated, and there is an increase in cost. Therefore, in the case where B is added, the B content is set to be 0.01% or less. To inhibit an increase in cost, it is preferable that the B content be 0.008% or less or more preferably 0.005% or less.

### V: 1.0% or less

V contributes to an increase in the strength of the steel pipe. Although there is no particular limitation on the lower limit of the V content, in the case where V is added to realize the effect described above, it is preferable that the V content be 0.0001% or more. It is more preferable that the V content be 0.001% or more. On the other hand, in the case where the V content is more than 1.0%, the effect described above becomes saturated, and there is an increase in cost. Therefore, in the case where V is added, the V content is set to be 1.0% or less. To inhibit an increase in cost, it is preferable that the V content be 0.5% or less.

### W: 5.0% or less

W contributes to an increase in the strength of the steel pipe. Although there is no particular limitation on the lower limit of the W content, in the case where W is added to realize the effect described above, it is preferable that the W content be 0.0001% or more. It is more preferable that the W content be 0.001% or more. On the other hand, in the case where the W content is more than 5.0%, the effect described above becomes saturated, and there is an increase in cost. Therefore, in the case where W is added, the W content is set to be 5.0% or less. To inhibit an increase in cost, it is preferable that the W content be 1.0% or less, more preferably 0.5% or less, or even more preferably 0.4% or less.

### Nb: 0.1% or less and Ti: 0.1% or less

Nb and Ti contribute to an increase in the strength of the steel pipe. Although there is no particular limitation on the lower limit of the contents of such elements, in the case where such elements are added to realize the effect described above, it is preferable that the content of each of Nb and Ti be 0.0001% or more. It is more preferable that the content of each of Nb and Ti be 0.001% or more. On the other hand, in the case where the content of each of Nb and Ti is more than 0.1%, the effect described above becomes saturated, and there is an increase in cost. Therefore, in the case where Nb and Ti are added, the content of each of Nb and Ti is set to be 0.1% or less. To inhibit an increase in cost, it is preferable that the content of each of Nb and Ti be 0.09% or less, more preferably 0.07% or less, or even more preferably 0.05% or less.

### Zr: 0.2% or less, Hf: 0.2% or less, and Ta: 0.2% or less

Zr, Hf, and Ta contribute to an increase in the strength of the steel pipe. Although there is no particular limitation on the lower limit of the contents of such elements, in the case where Zr, Hf, and Ta are added to realize the effect described above, it is preferable that the content of each of Zr, Hf, and Ta be 0.0001% or more. It is more preferable that the content of each of Zr, Hf, and Ta be 0.001% or more. On the other hand, in the case where the content of each of Zr, Hf, and Ta is more than 0.2%, the effect described above becomes saturated, and there is an increase in cost. Therefore, in the case where Zr, Hf, and Ta are added, the content of each of Zr, Hf, and Ta is set to be 0.2% or less. To inhibit an increase in cost, it is preferable that the content of each of Zr, Hf, and Ta be 0.01% or less.

### Sn: 0.2% or less and Sb: 0.2% or less

Sn and Sb cause a deterioration in the rolling workability of the steel pipe. Such elements are elements which may be contained in the case where scrap is used as a raw material, and there is no particular limitation on the lower limit of the contents of such elements. In the case where Sn and Sb are contained, the content of each of Sn and Sb is set to be 0.2% or less to inhibit a deterioration in the rolling workability of the steel pipe. It is preferable that the content of each of Sn and Sb be 0.1% or less or more preferably 0.05% or less. On the other hand, since it is preferable that the content of each of Sn and Sb be as small as possible, the content of each of Sn and Sb may be 0%. However, in such a case, there is an increase in cost. Therefore, in the case where Sn and Sb are contained, it is preferable that the content of each of Sn and Sb be 0.001% or more. To inhibit an increase in cost, it is more preferable that the content of each of Sn and Sb be 0.002% or more.

### Ca: 0.01% or less and Mg: 0.01% or less

Ca and Mg contribute to an improvement in the conditions of inclusions. Although there is no particular limitation on the lower limit of the contents of such elements, in the case where Ca and Mg are added to realize the effect described above, it is preferable that the content of each of Ca and Mg be 0.0001% or more. It is more preferable that the content of each of Ca and Mg be 0.001% or more. On the other hand, in the case where the content of each of Ca and Mg is more than 0.01%, the effect described above becomes saturated, and there is an increase in cost. Therefore, in the case where Ca and Mg are added, the content of each of Ca and Mg is set to be 0.01% or less. To inhibit an increase in cost, it is preferable that the content of each of Ca and Mg be 0.005% or less.

### REM: 0.5% or less

Rare earth metals (REM) contribute to an improvement in the conditions of inclusions. Although there is no particular limitation on the lower limit of the REM content, in the case where REM are added to realize the effect described above, it is preferable that the REM content be 0.0001% or more. It is more preferable that the REM content be 0.001% or more. On the other hand, in the case where the REM content is more than 0.5%, the effect described above becomes saturated, and there is an increase in cost. Therefore, in the case where REM are added, the REM content is set to be 0.5% or less. To inhibit an increase in cost, it is preferable that the REM content be 0.1% or less. Incidentally, REM is a generic term used to refer to Sc and Y, and fifteen elements from lanthanum (La) having an atomic number of 57 to lutetium (Lu) having an atomic number of 71, and the expression "REM content" here denotes the total content of these elements.

### [Manufacturing method]

Hereafter, the method for manufacturing the steel pipe according to the present invention will be described. In the description below, the method for manufacturing the steel pipe will be described by using the case where the steel pipe is a seamless steel pipe as an example. However, it is needless to say that it is possible to manufacture an electric resistance welded steel pipe and a UOE steel pipe by performing a treatment in such a manner that the thermal history realized in the case of the seamless steel pipe is reproduced. For example, in the case of an electric resistance welded steel pipe, it is possible to achieve the similar properties, by performing the casting process and the heating process described below, by thereafter rolling the steel sheet material under the condition of a finish rolling temperature of 820°C or higher, by thereafter performing the cooling process and the tempering process described below, and by thereafter performing welding to obtain an electric resistance welded steel pipe.

It is possible to manufacture the steel pipe according to the present invention by performing the following processes (1) to (5) in this order.
(1) casting process of casting a steel material whose chemical composition has been adjusted
(2) heating process of heating the cast material (steel material) cast in the casting process
(3) rolling process of rolling the cast material heated in the heating process to obtain a steel pipe
(4) cooling process of cooling the steel pipe obtained in the rolling process
(5) tempering process of tempering the steel pipe cooled in the cooling process

Hereafter, the processes will be described. Here, in the description below, the term "temperature" denotes the surface temperature of the steel material or the steel pipe, unless otherwise noted.

### [Casting process]

### Casting at a casting speed of 1.0 m/min or lower

The hydrogen concentration and the amounts of inclusions in steel decrease with a decrease in casting speed, and such an effect is marked in the case where the casting speed is 1.0 m/min or lower. Therefore, the casting speed is set to be 1.0 m/min or lower. Since the amounts of inclusions decrease with a decrease in casting speed, it is preferable that the casting speed be 0.5 m/min or lower or more preferably 0.1 m/min or lower. On the other hand, although there is no particular limitation on the lower limit of the casting speed, it is preferable that the casting speed be 0.01 m/min or higher from the viewpoint of productivity.

### [Heating process]

To perform hot rolling, the steel material having the chemical composition described above is heated. Although there is no particular limitation on the steel material described above, examples of the steel material include a billet or the like which is manufactured by using a common continuous casting method. In addition, to remove porous defects generated in the central portion of a cross section perpendicular to the casting direction of the cast material when continuous casting is performed, and to add a heat treatment process for desorbing hydrogen, using a billet, which is manufactured by hot forging the cast material having a rectangular cross section so as to have a circular cross section, is also effective.

### Heating at a temperature of 1350°C or lower

In the case where the heating temperature in the heating process is higher than 1350°C, since there is an excessive increase in the average grain size of prior austenite, there is a deterioration in various properties. Therefore, the heating temperature is set to be 1350°C or lower. It is preferable that the heating temperature be 1300°C or lower. On the other hand, in the case where the heating temperature is excessively low, since there is a decrease in finish rolling temperature, it is difficult for rolling to be performed. Therefore, it is preferable that the heating temperature be 950°C or higher. Although there is no particular limitation on the heating time (holding time at the heating temperature described above), since excessively long heating time causes a deterioration in productivity, it is preferable that the heating time be 180 minutes or less or more preferably 120 minutes or less.

### [Rolling process]

Subsequently, in the rolling process, the steel material which has been heated in the heating process described above is rolled so as to have a steel pipe shape. For such rolling, a common hot rolling process including piercing such as a Mannesmann-plug mill process or a Mannesmann-mandrel mill process may be used.

### Finish rolling temperature: 820°C or higher

In the case where the finish rolling temperature is lower than 820°C, since there is an excessive increase in rolling load, there is an increased risk of the occurrence of rolling troubles. Therefore, the finish rolling temperature is set to be 820°C or higher. It is preferable that the finish rolling temperature be 850°C or higher. On the other hand, although there is no particular limitation on the upper limit of the finish rolling temperature, since the metallic microstructure tends to be nonuniform in the case where the finish rolling temperature is excessively high, it is preferable that the finish rolling temperature be 1200°C or lower.

### [Cooling process]

Cooling to a temperature of 50°C or lower at an average cooling rate of 5°C/s or higher in a temperature range of 800°C to 350°C and at an average cooling rate of 3°C/s or lower in a temperature range of 350°C to 50°C

In the case where the average cooling rate in a temperature range of 800°C to 350°C is high, it is possible to achieve a uniform and fine carbide microstructure, which is effective for decreasing the fatigue crack growth rate. Therefore, the average cooling rate in a temperature range of 800°C to 350°C is set to be 5°C/s or higher. It is preferable that the average cooling rate in a temperature range of 800°C to 350°C be 6°C/s or higher, more preferably 8°C/s or higher, or even more preferably 10°C/s or higher. Although there is no particular limitation on the upper limit of such an average cooling rate, it is preferable that the average cooling rate in a temperature range of 800°C to 350°C be 15°C/s or lower from the viewpoint of coolant cost. Moreover, by performing cooling to a temperature of 50°C or lower at an average cooling rate of 3°C/s or lower in a temperature range of 350°C to 50°C, it is possible to decrease the amount of hydrogen in steel. Therefore, the average cooling rate in a temperature range of 350°C to 50°C is set to be 3°C/s or lower. It is preferable that the average cooling rate in a temperature range of 350°C to 50°C be 2.8°C/s or lower or more preferably 2.5°C/s or lower. Although there is no particular limitation on the lower limit of such an average cooling rate, it is preferable that the average cooling rate in a temperature range of 350°C to 50°C be 0.5°C/s or higher from the viewpoint of productivity.

There is no particular limitation on the method used for cooling, and a water cooling method, an oil cooling method, an air cooling method, or the like may be used separately or in combination. It is preferable that a water cooling method or an oil cooling method be used in a temperature range of 800°C to 350°C and that an air cooling method be used in a temperature range of 350°C to 50°C.

### [Tempering process]

Heating to a temperature of 400°C or higher and equal to or lower than the A1 transformation temperature

After cooling has been performed as described above, heating is performed to a temperature of 400°C or higher and equal to or lower than the A1 transformation temperature in the tempering process. In the case where the tempering temperature is 400°C or higher, there is a decrease in the fraction of retained austenite, and there is a decrease in the amount of hydrogen in steel. On the other hand, in the case where heating is performed to a temperature higher than the A1 transformation temperature, there may be an increase in the fraction of retained austenite, and there may be an increase in the amount of hydrogen in steel. Here, although it depends on the size and shape of the steel material, it is preferable that heating be performed to a temperature of 500°C or higher in the tempering process. In addition, it is preferable that heating be performed to a temperature of equal to or lower than (A1 transformation temperature - 30°C). Although there is no particular limitation on the tempering time (holding time at the tempering temperature), since the fraction of retained austenite and the amount of hydrogen in the steel material decrease with an increase in the tempering time, it is preferable that the tempering time be 60 minutes or more or more preferably 90 minutes or more.

Here, in the present invention, the A1 transformation temperature (°C) is calculated by using the following equation.

A1 transformation temperature (°C) = 751 - 16.3[%C] × 34.9[%Si] - 27.5[%Mn],
where [%C], [%Si], and [%Mn] in the above equation denote the contents (mass%) of C, Si, and Mn, respectively.

The steel pipe for high-pressure hydrogen according to the present invention has an excellent property regarding fatigue crack growth resistance represented by a fatigue crack growth rate of 8.0 × 10⁻⁸ m/cycle or lower when ΔK is 10 MPa·m^{1/2}. In addition, the steel pipe for high-pressure hydrogen according to the present invention has a tensile strength of 800 MPa or higher. It is preferable that the tensile strength be 850 MPa or higher. In addition, although there is no particular limitation, it is preferable that the tensile strength be 1200 MPa or lower from the viewpoint of hydrogen embrittlement. Here, the tensile strength is determined by using the method described in EXAMPLES. It is preferable that the steel pipe for high-pressure hydrogen according to the present invention be used for a high-pressure hydrogen vessel (high-pressure hydrogen gas-storing vessel). The high-pressure hydrogen vessel may be manufactured by, for example, forming the steel pipe for high-pressure hydrogen which is manufactured as described above into a predetermined shape. Here, in the present invention, the term "high-pressure hydrogen" denotes, for example, a hydrogen gas environment having a pressure of 1.0 MPa or higher.

### EXAMPLES

Hereafter, the present invention will be described more specifically in accordance with examples. The examples described below show preferable examples of the present invention, and the present invention is not limited to such examples at all.

By manufacturing billets having the chemical compositions given in Table 1 (with exception of H) by continuous casting, by heating the billets, by performing hot rolling on the heated billets, and by thereafter performing cooling and tempering, steel pipes were obtained. The manufacturing conditions are given in Table 2. Each of the obtained steel pipes was evaluated regarding the metallic microstructure, the amount of hydrogen, the tensile strength, and the fatigue crack growth rate. The evaluation methods are described below. Here, the H contents (mass%) given in Table 1 were determined by using the below-described method for evaluating the amount of hydrogen.

### Inclusion

The investigation regarding inclusions was conducted by using a test specimen for determining inclusions having a length in the longitudinal direction of 20 mm, a length in the width direction of 5 mm, and a length in the wall thickness direction of 15 mm which was taken from the central portion in the wall thickness direction of the steel pipe which had been subjected to tempering. By embedding such a test specimen in a resin in such a manner that a surface having a side in the longitudinal direction, that is, the rolling direction of the steel pipe, and a side in the wall thickness direction (a so-called "L-cross section") was an observation surface, by thereafter performing mirror polishing, and by thereafter performing visual observation with an optical microscope, the number density of inclusions having an aspect ratio of 2.0 or more and a length of 10 um or more in an area of 10 mm × 10 mm (100 mm²) was evaluated. Here, the number of the test specimens for determining inclusions was 10 for each test number, the number of inclusions having an aspect ratio of 2.0 or more and a length of 10 µm or more of such 10 test specimens were determined as described above, and the arithmetic average value of the total number of such 10 test specimens was defined as the number of inclusions (number density of inclusions) of the relevant test number. Incidentally, the aspect ratios and lengths of inclusions were determined in accordance with the prescription in JIS G 0555:2020 (Microscopic testing method for the non-metallic inclusions in steel) .

### Area fraction in metallic microstructure

From each of the obtained steel pipes, a test specimen was taken in such a manner that a position located at 1/4 of the wall thickness in the central portion in the longitudinal direction of the relevant steel pipe was the observation position. The cross section of such a test specimen was etched in a 3% nital solution. Subsequently, such a cross section was observed with a scanning electron microscope (SEM) at an appropriate magnification of 1000 times to 5000 times. By analyzing the obtained image, the kinds of phases and the area fraction of each of the phases were evaluated. The area fraction of retained austenite was determined by performing chemical polishing on the cross section of the test specimen described above and by performing X-ray diffraction analysis. By using the Co-Kα ray radiation source for the incidence X-ray, the area fraction of retained austenite was calculated from the intensity ratio of the (200)-plane, (211)-plane, and (220)-plane of ferrite to the (200)-plane, (220)-plane, and (311)-plane of austenite.

Incidentally, the properties of the high-pressure hydrogen vessel may also be determined by taking a sample from the central portion in the longitudinal direction of the relevant vessel as in the case of the steel pipe described above.

### Amount of hydrogen

The amount of hydrogen was determined by taking a round bar having a diameter of 15 mm and a length of 15 mm from the central portion in the wall thickness direction of the steel pipe which had been subjected to tempering and by performing thermal desorption analysis. Here, the amount of hydrogen was defined as the time integration quantity of the hydrogen desorption (the amount of hydrogen detected per one minute) from a time at which the hydrogen desorption started being detected (near room temperature) to a time at which the hydrogen desorption became lower than the lower detection limit for the first time after the temperature had been increased as the analysis progressed. On the other hand, depending on the steel grade, there was a case where the hydrogen desorption did not become lower than the lower detection limit, for example, as a result of hydrogen being strongly trapped within retained austenite grains. In such a case, the amount of hydrogen was defined as the integration quantity from a temperature at which detection started to a temperature of 400°C. In addition, the determination start temperature was set to be -100°C, and heating rate for analysis was set to be 200°C/h to increase analysis efficiency. Moreover, the number of round bars taken from one steel pipe was three, and the average hydrogen amount of such three round bars was defined as the amount of hydrogen in steel (hydrogen content given in Table 1) .

### Tensile strength (TS)

A round-bar test specimen having a diameter of 7 mm was taken from a position located at 1/4 of the wall thickness of the obtained steel pipe (a position located at 1/4 of the thickness from the outer surface-side of the steel pipe) in accordance with JIS Z 2201, and the tensile strength was determined in accordance with "Metallic materials-Tensile testing-Method" prescribed in JIS Z 2241.

### Fatigue crack growth rate

The fatigue crack growth rate was determined in high-pressure hydrogen gas having a pressure of 93 MPa. A CT test specimen having a thickness of 10 mm was taken from the inner surface-side of the steel pipe, the fatigue crack growth rate was determined by using such a test specimen while ΔK was gradually decreased from 15 MPa·m^{1/2} to 8 MPa·m^{1/2}, and the value when ΔK was 10 MPa·m^{1/2} was recorded. Here, the frequency of the cyclic stress applied in the fatigue crack growth process was set to be 1 Hz. Here, the fatigue crack growth rate is determined by using a CT test specimen having a thickness of 10 mm which is taken from the inner surface-side of the steel pipe in the case of a seamless steel pipe as described above, and, in the case of an electric resistance welded steel pipe, a UOE steel pipe, or the like (steel pipes manufactured from steel plates or steel sheets), the fatigue crack growth rate is determined by using a CT test specimen having a thickness of 10 mm which is taken from the steel pipe in such a manner that the center of the test specimen corresponds to a position located at 1/2 of the wall thickness of the steel pipe.

As shown in Table 2, the steel pipes (examples of the present invention), which satisfied the conditions of the present invention regarding the chemical composition and the metallic microstructure, had excellent properties represented by a sufficient tensile strength of 800 MPa or higher and a fatigue crack growth rate when ΔK was 10 MPa·m^{1/2} of 8.0 × 10⁻⁸ m/cycle or less.

As described above, the steel pipe according to the present invention has high strength and excellent fatigue crack growth resistance. Similarly, the high-pressure hydrogen vessel which is manufactured by using such a steel pipe also has high strength and excellent fatigue crack growth resistance.

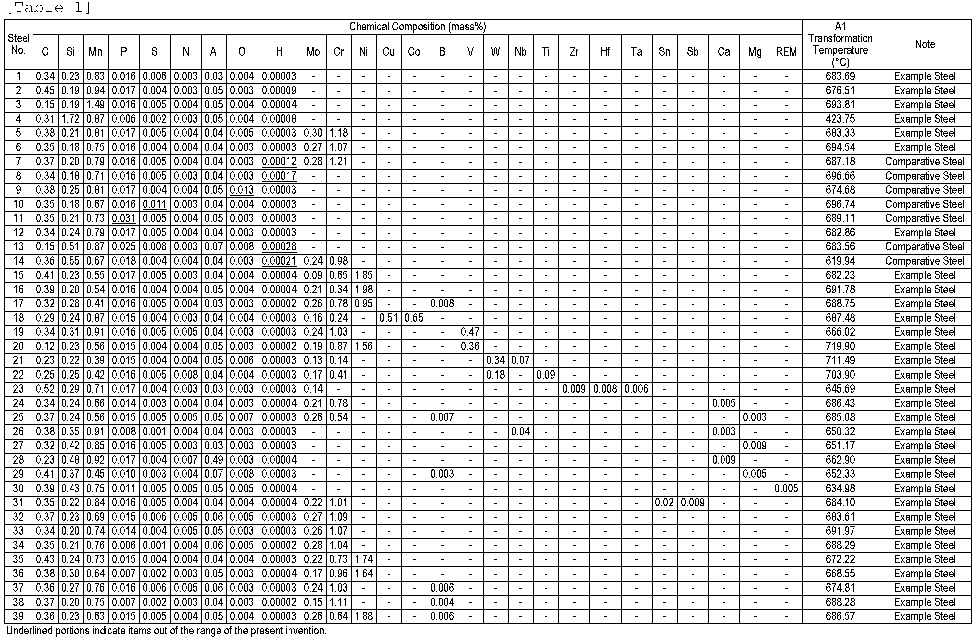

**[Table 2]**

| Test No. | Steel No. | Casting Speed (m/min) | Heating Temperature (°C) | Finish Rolling Temperature (°C) | Average Cooling Rate from 800°C to 350°C (°C/s) | Average Cooling Rate from 350°C to 50°C (°C/s) | Tempering Temperature (°C) | Tempering Time (minute) | Area Fraction of Retained Austenite (%) | Total Area Fraction of Martensite and Bainite (%) | Inclusion Number Density (per 100 mm²) | Tensile Strength (MPa) | Fatigue Crack Growth Rate (10⁻⁸ m/cycle) | Note |
|---|---|---|---|---|---|---|---|---|---|---|---|---|---|---|
| 1 | 1 | 0.48 | 1311 | 831 | 11.1 | 2.6 | 600 | 60 | 0.0 | 100.0 | 7.8 | 808 | 6.5 | Example |
| 2 | 2 | 0.47 | 1324 | 834 | 9.7 | 2.9 | 600 | 60 | 0.0 | 90.0 | 6.5 | 827 | 7.9 | Example |
| 3 | 3 | 0.47 | 1348 | 823 | 6.6 | 2.1 | 600 | 60 | 0.0 | 90.0 | 7.3 | 814 | 4.2 | Example |
| 4 | 4 | 0.12 | 1339 | 829 | 13.5 | 2.4 | 420 | 240 | 1.2 | 98.8 | 1.8 | 1178 | 7.7 | Example |
| 5 | 5 | 0.41 | 1327 | 835 | 123 | 2.5 | 650 | 60 | 0.0 | 100.0 | 6.1 | 897 | 6.2 | Example |
| 6 | 6 | 0.42 | 1326 | 831 | 5.2 | 2.6 | 650 | 60 | 0.0 | 95.0 | 5.4 | 879 | 6.6 | Example |
| 7 | 7 | 0.51 | 1325 | 829 | 5.7 | 3.5 | 650 | 60 | 0.0 | 95.0 | 4.5 | 887 | 13.7 | Comparative Example |
| 8 | 8 | 0.36 | 1316 | 824 | 5.1 | 2.9 | 350 | 240 | 0.0 | 95.0 | 7.8 | 1225 | 25.6 | Comparative Example |
| 9 | 9 | 0.58 | 1315 | 831 | 6.4 | 2.7 | 650 | 60 | 0.0 | 95.0 | 16.5 | 867 | 12.3 | Comparative Example |
| 10 | 10 | 0.43 | 1315 | 825 | 5.7 | 2.5 | 650 | 60 | 0.0 | 95.0 | 18.9 | 872 | 16.7 | Comparative Example |
| 11 | 11 | 0.44 | 1312 | 826 | 5.3 | 2.4 | 650 | 60 | 0.0 | 95.0 | 5.1 | 878 | 9.7 | Comparative Example |
| 12 | 12 | 1.05 | 1309 | 827 | 6.1 | 2.5 | 650 | 60 | 0.0 | 95.0 | 21.3 | 837 | 21.8 | Comparative Example |
| 13 | 13 | 0.32 | 1321 | 831 | 3.5 | 2.6 | 650 | 60 | 4.2 | 85.8 | 5.2 | 823 | 13.6 | Comparative Example |
| 14 | 14 | 0.61 | 1342 | 823 | 6.8 | 2.9 | 700 | 60 | 5.8 | 89.2 | 6.3 | 876 | 18.7 | Comparative Example |
| 15 | 15 | 0.25 | 1322 | 824 | 7.1 | 2.3 | 650 | 60 | 0.0 | 100.0 | 8.3 | 897 | 4.3 | Example |
| 16 | 16 | 0.17 | 1321 | 825 | 10.2 | 2.1 | 650 | 60 | 0.0 | 100.0 | 1.4 | 1156 | 7.9 | Example |
| 17 | 17 | 0.76 | 1326 | 833 | 5.6 | 2.4 | 650 | 60 | 0.0 | 100.0 | 4.7 | 857 | 6.5 | Example |
| 18 | 18 | 0.64 | 1317 | 828 | 6.2 | 12 | 650 | 60 | 0.0 | 95.0 | 10.2 | 845 | 6.7 | Example |
| 19 | 19 | 0.88 | 1315 | 824 | 6.1 | 2.3 | 650 | 60 | 0.0 | 95.0 | 11.8 | 871 | 7.5 | Example |
| 20 | 20 | 0.23 | 1323 | 841 | 5.8 | 2.6 | 650 | 60 | 0.0 | 100.0 | 7.3 | 812 | 5.7 | Example |
| 21 | 21 | 0.54 | 1317 | 832 | 5.5 | 2.5 | 650 | 60 | 0.0 | 95.0 | 5.9 | 824 | 6.7 | Example |
| 22 | 22 | 0.65 | 1326 | 834 | 6.7 | 2.4 | 650 | 60 | 0.0 | 95.0 | 4.6 | 834 | 5.2 | Example |
| 23 | 23 | 0.53 | 1321 | 823 | 8.3 | 2.7 | 630 | 60 | 0.0 | 100.0 | 4.2 | 974 | 7.6 | Example |
| 24 | 24 | 0.63 | 1319 | 825 | 5.8 | 2.8 | 650 | 60 | 0.0 | 95.0 | 5.6 | 861 | 32 | Example |
| 25 | 25 | 0.72 | 1314 | 841 | 5.4 | 2.4 | 650 | 60 | 0.0 | 100.0 | 8.7 | 876 | 7.3 | Example |
| 26 | 26 | 0.67 | 1315 | 832 | 5.5 | 2.3 | 650 | 60 | 0.0 | 100.0 | 2.3 | 902 | 6.5 | Example |
| 27 | 27 | 0.53 | 1317 | 837 | 5.3 | 2.1 | 650 | 60 | 0.7 | 95.0 | 6.5 | 843 | 4.3 | Example |
| 28 | 28 | 0.81 | 1313 | 825 | 5.8 | 17 | 650 | 60 | 1.2 | 98.8 | 9.4 | 812 | 7.4 | Example |
| 29 | 29 | 0.33 | 1225 | 826 | 6.7 | 2.8 | 650 | 60 | 0.3 | 95.0 | 36 | 953 | 39 | Example |
| 30 | 30 | 0.42 | 1305 | 834 | 7.6 | 2.1 | 620 | 60 | 0.0 | 100.0 | 5.8 | 987 | 7.8 | Example |
| 31 | 31 | 0.46 | 1327 | 827 | 5.3 | 2.7 | 650 | 60 | 0.0 | 100.0 | 4.3 | 883 | 6.1 | Example |
| 32 | 32 | 0.54 | 1325 | 831 | 6.1 | 2.3 | 650 | 60 | 0.0 | 100.0 | 5.3 | 873 | 5.3 | Example |
| 33 | 33 | 0.49 | 1318 | 832 | 5.7 | 2.4 | 650 | 60 | 0.0 | 100.0 | 5.1 | 861 | 5.1 | Example |
| 34 | 34 | 0.64 | 1332 | 829 | 5.4 | 2.4 | 650 | 60 | 0.0 | 100.0 | 6.1 | 866 | 4.8 | Example |
| 35 | 35 | 0.43 | 1316 | 824 | 6.8 | 2.8 | 650 | 60 | 0.0 | 100.0 | 3.7 | 891 | 5.6 | Example |
| 36 | 36 | 0.51 | 1322 | 836 | 6.4 | 2.6 | 650 | 60 | 0.0 | 95.0 | 6.2 | 888 | 6.2 | Example |
| 37 | 37 | 0.50 | 1330 | 833 | 5.9 | 19 | 650 | 60 | 0.0 | 100.0 | 5.8 | 876 | 2.7 | Example |
| 38 | 38 | 0.61 | 1323 | 826 | 5.8 | 2.5 | 650 | 60 | 0.0 | 100.0 | 7.1 | 868 | 5.4 | Example |
| 39 | 39 | 0.57 | 1312 | 830 | 5.4 | 2.8 | 650 | 60 | 0.0 | 1000 | 6.9 | 897 | 31 | Example |

| | | | | | | | | | | | | | | |
|---|---|---|---|---|---|---|---|---|---|---|---|---|---|---|
| Underlined portions indicate items out of the range of the present invention. | | | | | | | | | | | | | | |

## Claims

1. A steel pipe for high-pressure hydrogen, the steel pipe having a chemical composition containing, by mass%,
C: 0.05% to 0.60%,
Si: 0.001% to 2.0%,
Mn: 0.01% to 5.0%,
P: 0.030% or less,
S: 0.010% or less,
N: 0.010% or less,
Al: 0.0001% to 1.00%,
O: 0.010% or less,
H: 0.00010% or less, and a balance of Fe and incidental impurities and
a metallic microstructure including, in terms of area fraction, 3% or less (including 0%) of retained austenite, in which a number of inclusions having an aspect ratio of 2.0 or more and a length of 10 um or more is 15/100 mm² or less.

2. The steel pipe for high-pressure hydrogen according to Claim 1, wherein the chemical composition further contains, by mass%, one or both selected from
Mo: 5.0% or less and
Cr: 5.0% or less.

3. The steel pipe for high-pressure hydrogen according to Claim 1 or 2, wherein the chemical composition further contains, by mass%, one, two, or more selected from
Ni: 5.0% or less,
Cu: 5.0% or less,
Co: 5.0% or less, and
B: 0.01% or less.

4. The steel pipe for high-pressure hydrogen according to any one of Claims 1 to 3, wherein the chemical composition further contains, by mass%, one, two, or more selected from
V: 1.0% or less,
W: 5.0% or less,
Nb: 0.1% or less,
Ti: 0.1% or less,
Zr: 0.2% or less,
Hf: 0.2% or less,
Ta: 0.2% or less,
Sn: 0.2% or less, and
Sb: 0.2% or less.

5. The steel pipe for high-pressure hydrogen according to any one of Claims 1 to 4, wherein the chemical composition further contains, by mass%, one, two, or all selected from
Ca: 0.01% or less,
Mg: 0.01% or less, and
REM: 0.5% or less.

6. A high-pressure hydrogen vessel, the vessel being manufactured by using the steel pipe for high-pressure hydrogen according to any one of Claims 1 to 5.

7. A method for manufacturing a steel pipe for high-pressure hydrogen, the method comprising:
a casting process of casting a steel material having the chemical composition according to any one of Claims 1 to 5 at a casting speed of 1.0 m/min or lower;
a heating process of heating the steel material cast in the casting process at a temperature of 1350°C or lower;
a rolling process of rolling the steel material heated in the heating process under a condition of a finish rolling temperature of 820°C or higher to manufacture a steel pipe;
a cooling process of cooling the steel pipe obtained in the rolling process to a temperature of 50°C or lower at an average cooling rate of 5°C/s or higher in a temperature range of 800°C to 350°C and at an average cooling rate of 3°C/s or lower in a temperature range of 350°C to 50°C; and
a tempering process of heating the steel pipe cooled in the cooling process to a temperature of 400°C or higher and equal to or lower than an A1 transformation temperature to temper the heated steel pipe.
